# EUROPEAN PATENT SPECIFICATION

(11) **EP 3 617 517 B1**
(45) Date of publication and mention of the grant of the patent: **01.05.2024**
(21) Application number: 19193209.4
(22) Date of filing: 22.08.2019
(51) Int. Cl.: F04D 13/06, F04D 29/02

(54) **ELECTRIC COOLANT PUMP AND MANUFACTURING METHOD FOR MOVABLE UNIT OF THE SAME**
ELEKTRISCHE KÜHLMITTELPUMPE UND HERSTELLUNGSVERFAHREN FÜR EINE BEWEGLICHE EINHEIT DERSELBEN
POMPE À LIQUIDE DE REFROIDISSEMENT ÉLECTRIQUE ET PROCÉDÉ DE FABRICATION D'UNE UNITÉ MOBILE LA COMPRENANT

(30) Priority: 29.08.2018 CN 201810995722
(43) Date of publication of application: 04.03.2020
(73) Proprietor: Johnson Electric International AG, 3280 Murten (CH)
(72) Inventor: ZOU, Guoyuan, Shatin, N.T. (HK); ZHANG, Hongliang, Shatin, N.T. (HK); LI, Daigang, Shatin, N.T. (HK); CHEN, Anbang, Shatin, N.T. (HK); QIN, Ruifeng, Shatin, N.T. (HK); LIANG, Guanyin, Shatin, N.T. (HK)
(74) Representative: Hocking, Adrian Niall

(56) References cited:
- WO-A1-2009/037019
- DE-A1-102015 210 703
- US-A1- 2006 057 006
- US-A1- 2017 037 855
- US-A1- 2017 082 117
- US-B2- 8 047 816

## Description

### FIELD OF THE DISCLOSURE

This present disclosure relates to an electric cooling pump and method for manufacturing a movable unit thereof.

### BACKGROUND OF THE DISCLOSURE

As is disclosed in US2017/082117A1, US2017/037855 and US2006/057006A1, an electric coolant pump generally includes a pump house, a motor connected to the pump house, and an impeller housed in the pump house and driven by the motor. The motor includes a stator and a rotor rotatably mounted within the stator. Bearings are disposed between the stator and the rotor to rotatably support the rotor. The bearing should be prevented from being loosen or fall off in work. Furthermore, high coaxiality of different bearings cooperatively supporting the rotor is request. Therefore, the bearings should be precisely processed, e.g. the outer and inner diameters of the bearings should be precise with low tolerance. Manufacturing difficulty and cost are significantly increased.

### SUMMARY

Thus, an object of the present invention is to provide an electric coolant pump that is easy to process and low in cost.

According to one aspect, an electric coolant pump according to claim 1 is provided.

According to another aspect, a manufacturing method for the movable unit above is provided. The manufacturing method includes integrating the rotor core and the permanent magnets, and forming the support body, and integrating the pre-integrated permanent magnets and rotor core, and the bearing assembly. In integrating the rotor core and the permanent magnets, the permanent magnets are inserted into the rotor core, and then a protective sleeve is formed to wrap the rotor core by a first process of insert-molding. The bearing assembly is acquired by providing two bearings and a positioning sleeve defining a positioning groove at each of opposite axial ends thereof, and then respectively embedding the two bearings at the positioning grooves in opposite end of the positioning sleeve to axially aligned the two bearings and the positioning sleeve, wherein an inner diameter of the positioning sleeve is larger than that of the bearings, the two bearings are in friction fit with the central shaft and the positioning sleeve is in clearance fit with the central shaft to prevent the positioning sleeve from interfering with the central shaft. In forming the forming the support body, the pre-integrated permanent magnets and rotor core, and the bearing assembly is positioned in an injection tooling, with the bearing assembly sleeved by the rotor core, and then a resin material is injected into the injection tooling to form the support body connecting the pre-integrated permanent magnets and rotor core, and the bearing assembly by a second process of insert-molding.

### BRIEF DESCRIPTION OF THE DRAWINGS

A preferred embodiment of the disclosure will now be described, by way of example only, with reference to figures of the accompanying drawings. In the figures, identical structures, elements or parts that appear in more than one figure are generally labeled with a same reference numeral in all the figures in which they appear. Dimensions of components and features shown in the figures are generally chosen for convenience and clarity of presentation and are not necessarily shown to scale. The figures are listed below.
FIG. 1 is a perspective view of an electric coolant pump according to a first embodiment of the present invention;
FIG. 2 is an exploded view of FIG. 1;
FIG. 3 is a cross-sectional view of FIG. 1;
FIG. 4 is another perspective view of the pump house showed of FIG.2;
FIG. 5 is further exploded view of the bearing assembly of the pump body shown of FIG. 2;
FIG. 6 is an enlarged perspective view of the impeller, the support body, the protective sleeve, and the rotor core shown of FIG. 2;
FIG. 7 is another perspective view of the impeller, the support body, and the protective sleeve of FIG. 6; and

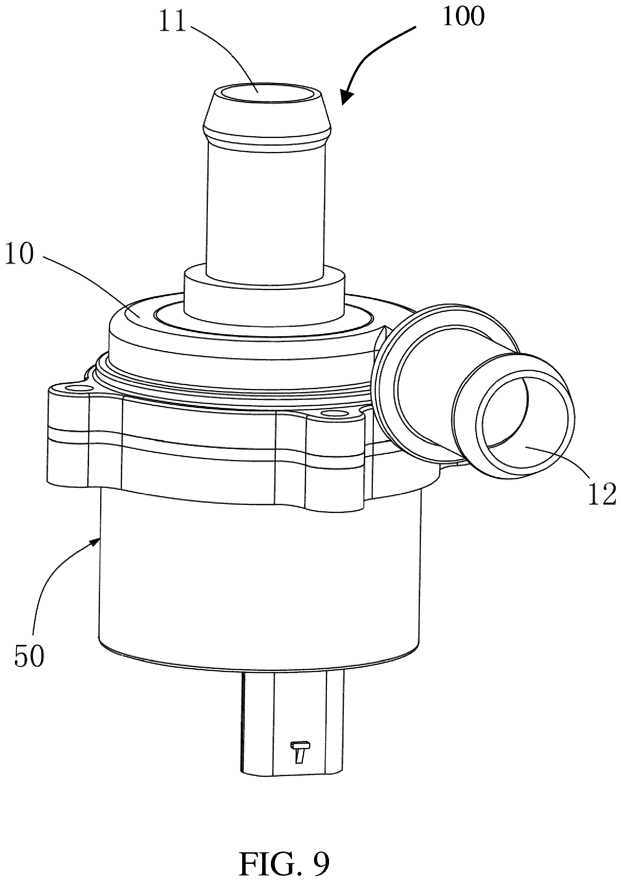

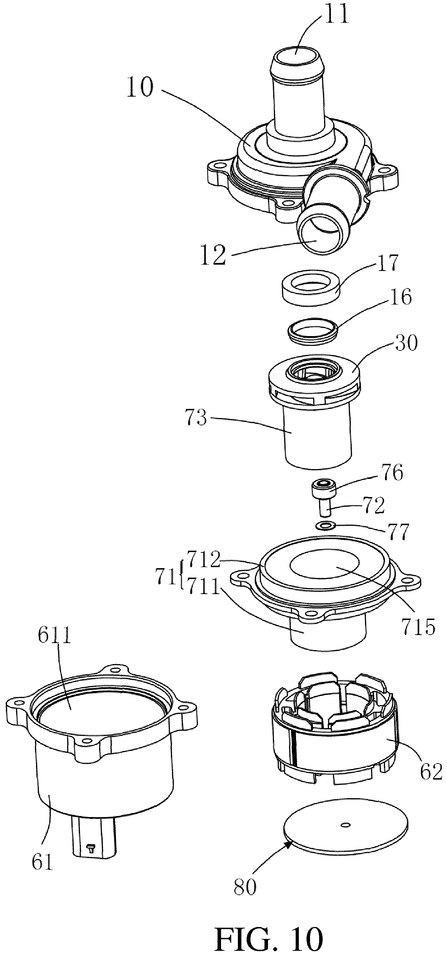

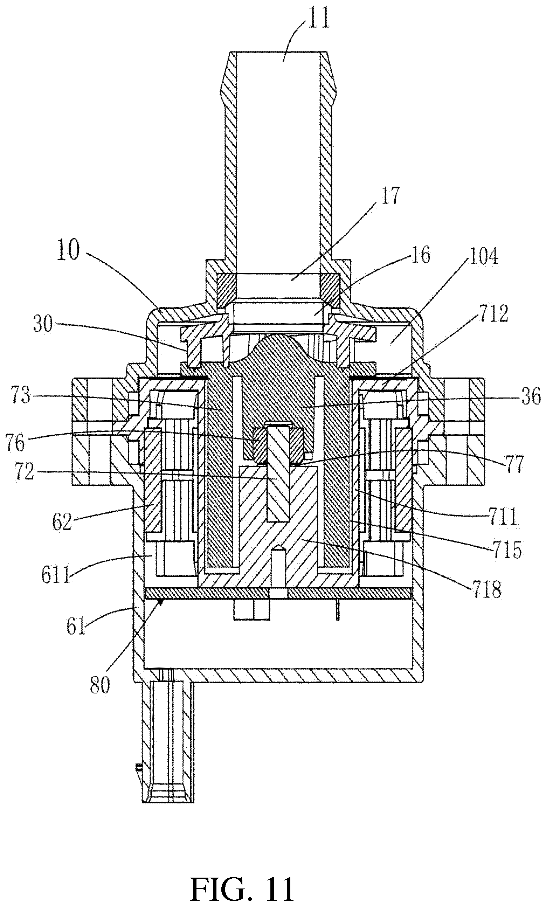

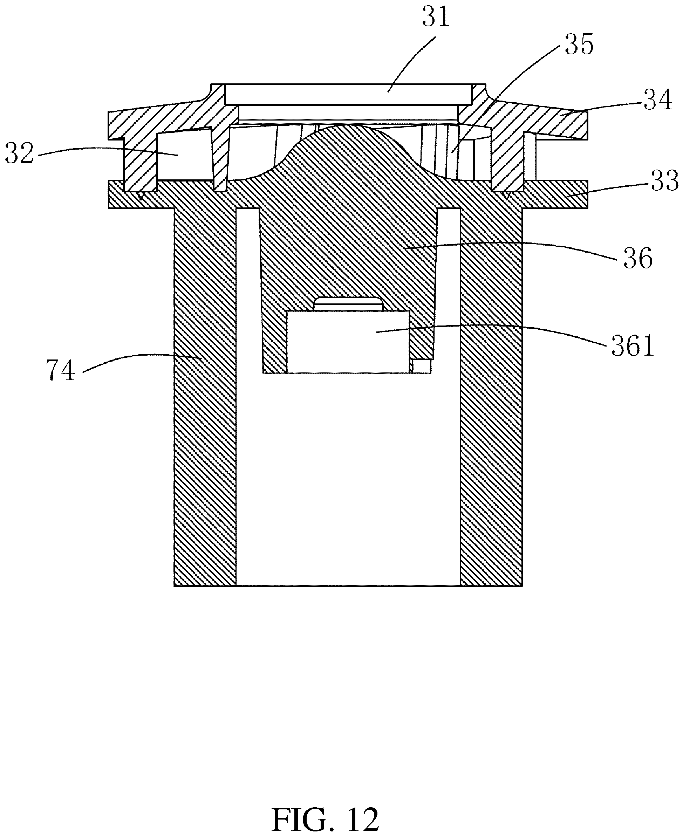

FIG. 8 is a flowchart of a manufacturing method of a movable unit of the electric coolant pump according to an embodiment of the present invention. Fig. 9-12 show another embodiment, which is not covered by the scope of the claims.

### DETAILED DESCRIPTION OF THE PREFERRED EMBODIMENTS

The subject matter will be described in conjunction with the accompanying drawings and the preferred embodiments. It is to be understood that, the drawings are provided for reference only and are not intended to be limiting of the invention. The dimensions shown in the drawings are only for convenience of illustration and are not intended to be limiting.

It should be noted that when a component is considered to be "connected" to another component, it can be directly connected to another component or may also have a centered component. Unless otherwise defined, all technical and scientific terms used herein have the same meaning as commonly understood by those ordinarily skilled in the art. The terminology used in the specification of the present disclosure is only for the purpose of describing particular embodiments and is not intended to limit the invention.

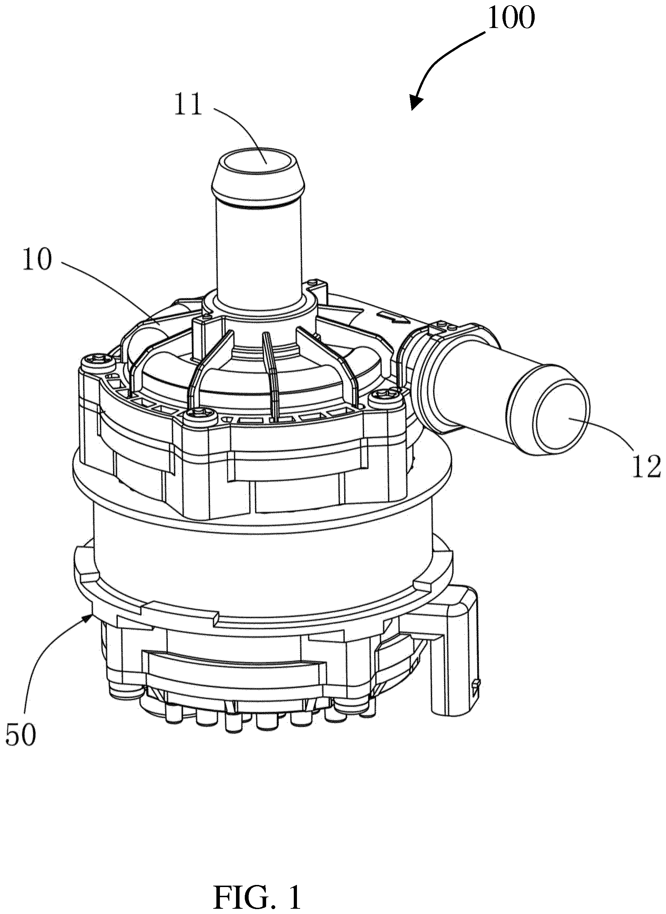

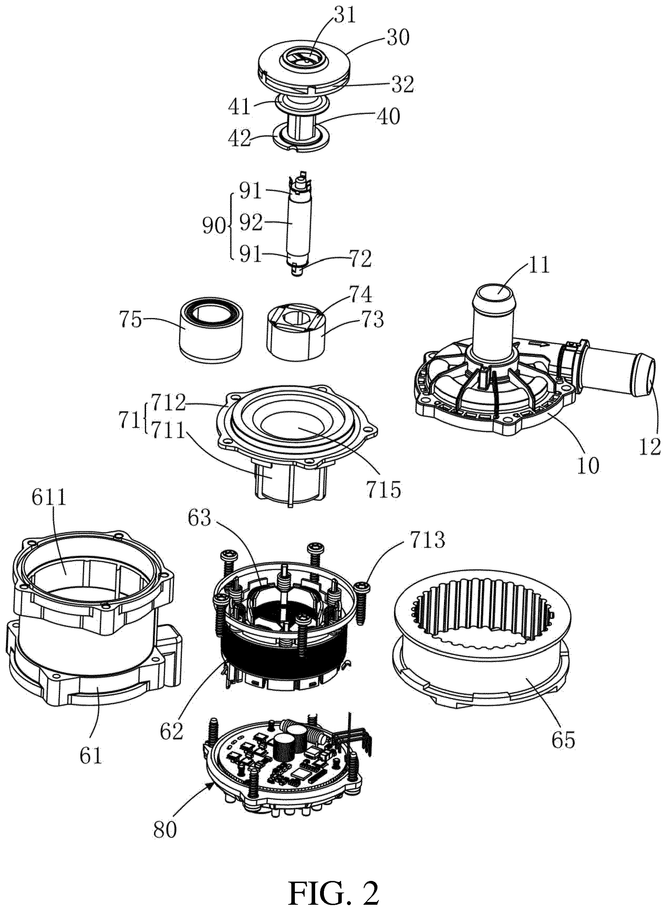

Referring to FIGs. 1 and 2, an electric coolant pump 100 of a first embodiment includes a pump house 10 , a motor 50 connected to the pump house 10, and an impeller 30 housed in the pump house 10 and driven by the motor 50. The pump house 10 has a pump inlet 11 and a pump outlet 12. When the motor is powered, the impeller is driven to rotate in the pump house 10, coolant flow into the pump house 10 via the pump inlet 11 and exhaust outer of the pump house 10 via the pump outlet 12.

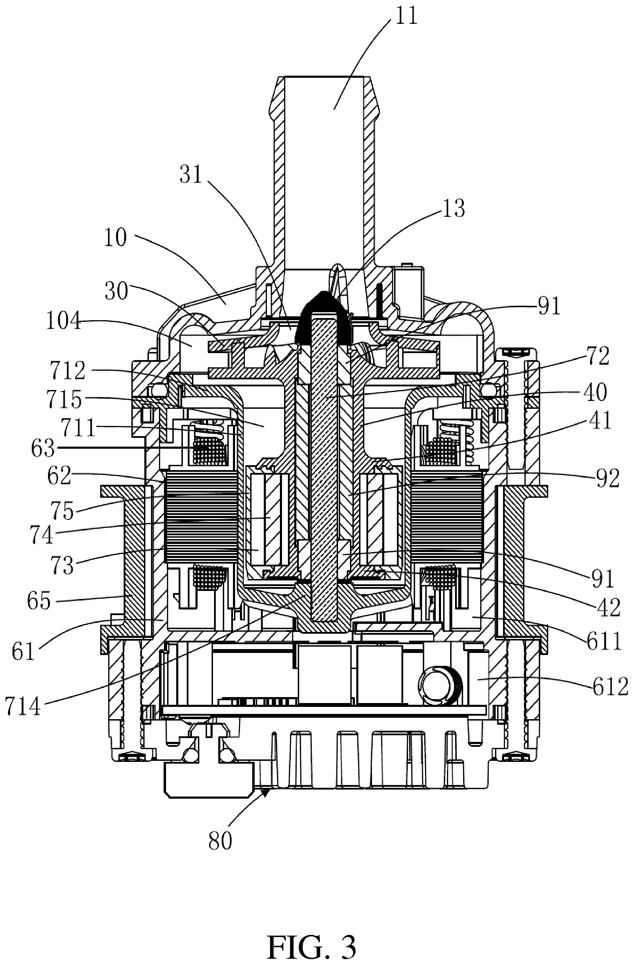

Referring also to FIG. 3, the motor 50 is an inner rotor motor including a stator and a movable unit rotatably mounted within the stator.

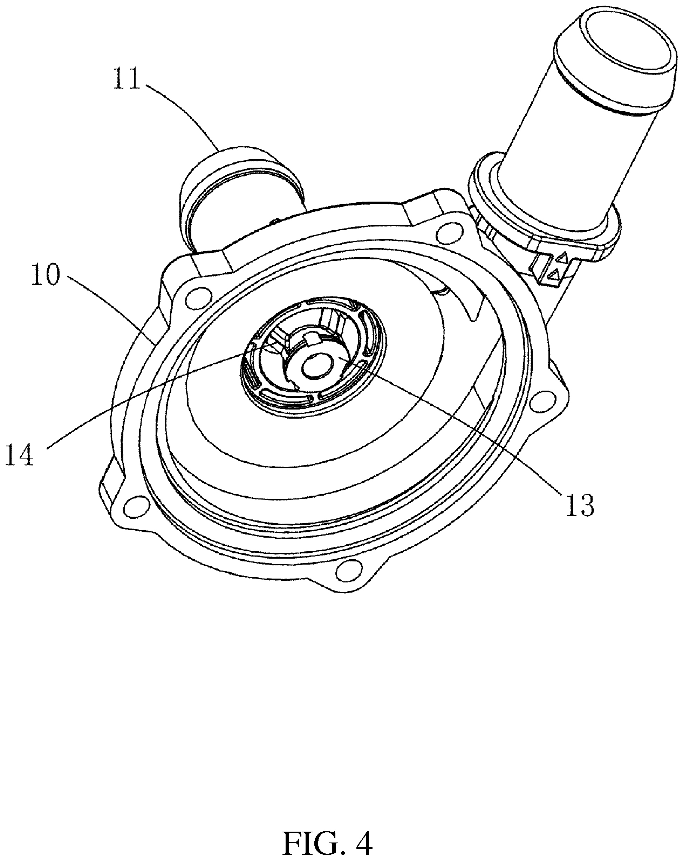

The stator includes a cylindrical stator outer casing 61, a stator inner casing 71, a stator core 62 disposed between the stator outer casing 61 and the stator inner casing 71, a stator winding 63 wound around the stator core 62, and a central shaft 72 fixed in the stator inner casing 71. An end (top end in Fig. 3) of the stator outer casing 61 and an end (top end in Fig. 3) of the stator inner casing 71 are connected to the pump house 10. The movable unit is housed in the stator inner casing 71 and is rotatably sleeved on the central shaft 72. The stator inner casing 71 includes a cylindrical portion 711 opened at one of opposite ends (top end in FIG. 3) and closed at the other end (bottom end in FIG. 4) with a bottom plate, and an annular flange 712 surrounding the open end of the cylindrical portion 711. The annular flange 712 is fixed to the pump house 10 and is sandwiched between stator outer casing 61 and the pump house 10. An inner cavity 715 of the cylindrical portion 711 is in communication with a pump chamber 104 of the pump house 10. The impeller 30 is closed to the opening end of the cylindrical portion 711, and an impeller inlet 31 of the impeller 30 is aligned with the pump inlet 11 of the pump house 10.

Referring also to FIGs. 3 and 4, one of opposite ends of the center shaft 72 is fixed to the bottom plate of the cylindrical portion 711. The other end of the center shaft 72 extends through the impeller 30 and fixed to the pump house 10. Specifically, a convex hub 714 is form on the bottom plated of the cylindrical portion 711, and the end of the central shaft 72 is fixed into the convex hub 714. A fixing member 13 is provided in the pump house 10 adjacent to the pump inlet 11. The fixing member 13 partially projects into the impeller inlet 31. The end of the central shaft 72 is fixed to the fixing member 13. Preferably, the fixing member 13 is provided with a plurality of connecting arms 14 through which the fixing member 13 is attached to the pump house 10. In one embodiment, the plurality of connecting arms 14 includes three connecting portions 14 which are evenly distributed along a circumferential direction of the fixing member 13.

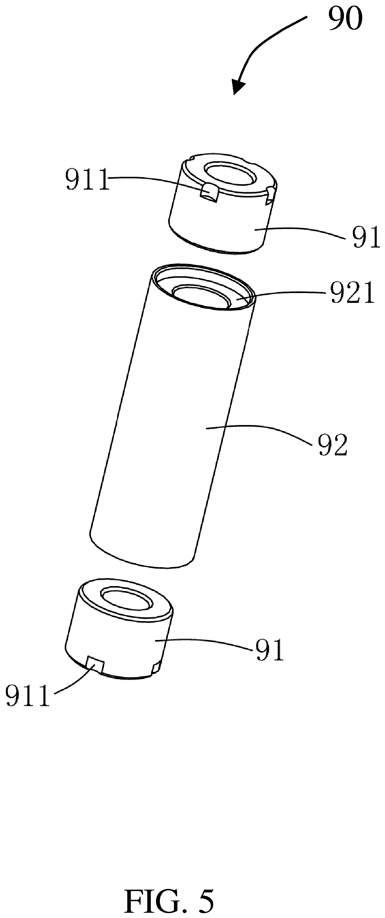

Referring to FIG. 5, the movable unit is accommodated in the inner cavity 715 of the stator inner casing 71. The movable unit includes a support body 40 defining a central through hole, a bearing assembly 90 fixed to the support body 40, a rotor core 73 fixed to and an end of the support body 40, and a plurality of permanent magnets 74 embedded in the rotor core 73.

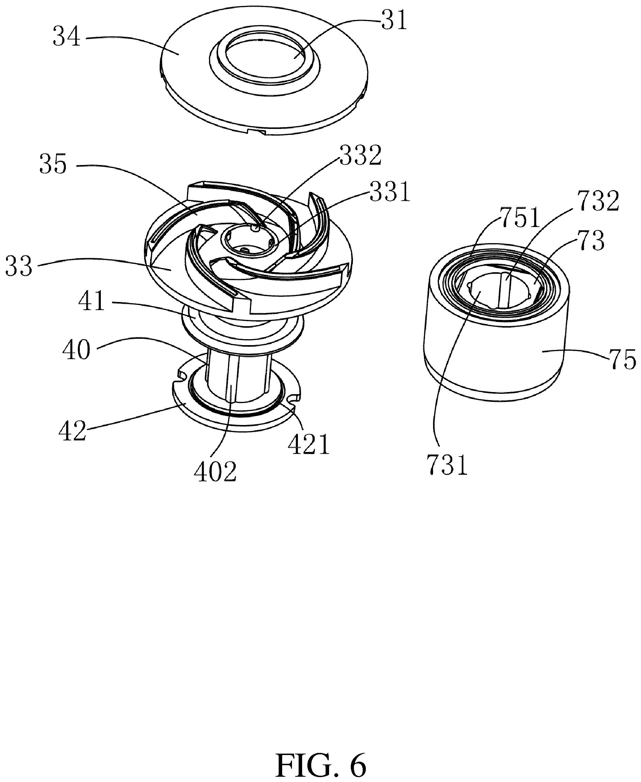

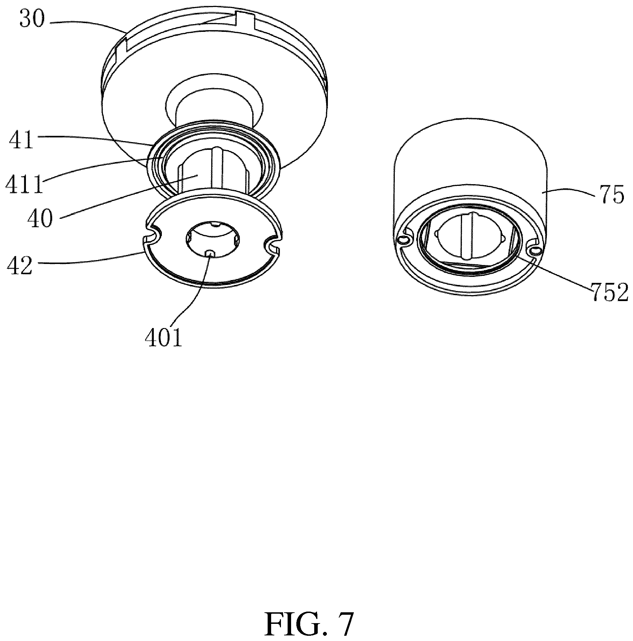

Referring to FIGs. 6, and 7, the rotor is rotatably supported by the central shaft 72 through the bearing assembly 90.

The bearing assembly 90 includes a cylindrical positioning sleeve 92 and two bearings 91 positioned at opposite ends of the positioning sleeve 92, respectively. The positioning sleeve 92 is hollow with an inner diameter of the positioning sleeve 92 is larger than the inner diameter of the bearings 91. In one embodiment, the two bearings 91 are bushing made of graphite or a material having a low coefficient of friction. It can be understood that in other embodiments, the two bearings 91 may also be ball bearings. In assembly, the two bearings 91 are in friction fit with the central shaft 72, and the positioning sleeve 92 is in clearance fit with the central shaft 72 to prevent the positioning sleeve 92 from interfering with the central shaft 72. The two bearings are supported and linked with each other by the positioning sleeve 92, to improve coaxiality of the two bearings 91. In one embodiment, opposite axial ends of the positioning sleeve 92 respectively defines a positioning groove 921. Therefore, the two bearing 91 can respectively partially embedded in the corresponding positioning grooves 91 to make it convenient for alignment of the two bearings 91.

The impeller 30 includes a bottom bezel 33, a cover bezel 34 opposite and spaced apart from the bottom bezel 33, and a plurality of vanes 35 connected between the bottom bezel 33 and the cover bezel 34. The cover bezel 34 defines the pump wheel inlet 31.

In one embodiment, the bottom bezel 33 and the vane 35 are integrally formed with the support body 40, and the cover bezel 34 is detachably fastened to the top end of the vane 35. Specifically, in a process of insert-molding, the support body 40, the bottom bezel 33 at one end of the support body 40, and the bottom bezel 33 on the top side of the bottom plate 33 formed. At the same time, the bearing assembly 90 is fixedly embedded in the support body 40. By this process, the step of mounting the impeller 30 to the support body 40 can be omitted, and the step of mounting the bearing assembly 90 is also omitted, thereby simplifying the manufacture method.

To improve the connection strength between the bearing assembly 90 and the support body 40, a plurality of recesses 911 is defined in outer surface of each bearing 91. The support body 40 respectively forms a plurality of bosses 332, 401 correspondingly snapped into the recesses 911. The engagement of the recesses 911 and the bosses 332, 401 help to prevent a rotation of the two bearings 91 relative to the support body 40.

Before the support body 40 is formed, integrating the rotor core 73 and the permanent magnets 74 are executed. Specifically, the permanent magnets 74 are embedded in the rotor core 73 and then the rotor core 73 are wrapped with a protective sleeve 75 by a first process of insert-molding. Then, the integrated assembly of the permanent magnets 74, the rotor core 73, and the protective sleeve 75, and the bearing assembly 90 are further connected with a second process of insert-molding, in which the support body 40 is formed simultaneously. Therefore, the movable unit is integrated as a whole rotatably mounted to the central shaft 72.

Specifically, the protective sleeve 75 is formed in the first process of insert-molding with resin. The protective sleeve 75 covers both axial ends and circumferential surface of the rotor core 73. The support body 40 is provided with a first annular ring 41 and a second annular ring 42 axially spaced from and substantially parallel to each other. The rotor core 73 is fixed to the support body 40 and sandwiched between the first and second annular rings 41. As such, the protective sleeve 75 mates with the support body 40 to cover all of the outer and inner surfaces of the rotor core 73, preventing the rotor core 73 and the permanent magnets 74 from being destroyed by the coolant to be conveyed. It can be understood that in other embodiments, the rotor core 73 and the permanent magnets 74 may be fixed to the support 40 by means of pasting or the like.

In one embodiment, sides of first annular ring 41 and the second annular ring 42 facing each other are respectively provided with a plurality of ripples 411 and 421. Two axial ends of the protective sleeve 75 respectively define engagement grooves 751, and 752 that are configured to correspondingly engage with the ripples 411 and 421 to improve the bonding strength between the protective sleeve 75 and the support body 40.

An outer circumferential surface of the support body 40 is formed with a plurality of ribs 402 extending in the axial direction between the first connecting portion 41 and the second connecting portion 42. Inner wall of a through hole 731 of the rotor core 73 defines a plurality of recesses 732 extending in the axial direction. In forming of the support body 40, the ribs 402 correspondingly engage with the recesses 732 to improve the bonding strength between the support body 40 and the rotor core 73. In one embodiment, the plurality of ribs 402 includes four ribs 402 evenly distributed along a circumferential direction of the support body 40. Correspondingly, the plurality of the recesses 732 includes four recesses 732.

Referring to FIG. 2 and FIG. 3 again, the stator outer casing 61 is sleeved by a mounting bracket 65 for mounting the electric coolant pump 100 in place. A first accommodating space 611 and a second accommodating space 612 are formed in the stator outer casing 61 along the axial direction of the electric coolant pump 100. The stator core 62 and the stator inner casing 71 are mounted in the first accommodating space 611. A controller 80 is mounted in the second accommodating space 612 and electrically connected to the stator winding 63 for power supply of the winding 63 and driving the electric coolant pump 100.

In one embodiment, the cylindrical portion 711 of the stator inner casing 71 is located in a space bounded by stator teeth of the stator core 62. The annular flange 712 of the stator inner casing 71 is close to the pump house 10, and one end of the pump house 10, the outer ring portion 712, and the stator outer casing 61 is detachable fixed to each other by a plurality of fasteners 713 such as a screws or the like.

Since the stator inner casing 71 and the pump house 10 are in a sealed connection, the stator core 62 and the controller 80, which are mounted outside of the inner casing 71 are prevented from being immersed in the coolant and damaged.

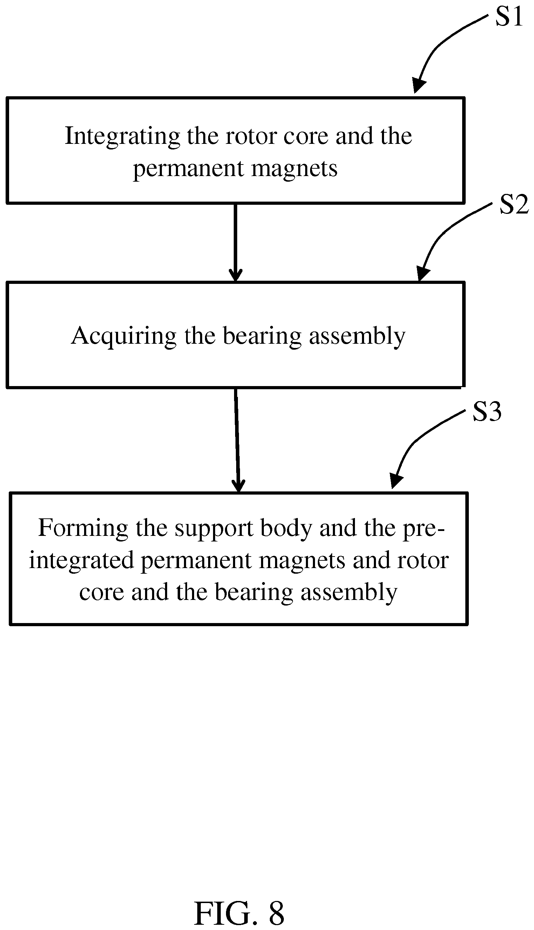

Referring to FIG. 8, the present invention also provides a manufacturing method for the movable unit of the electric coolant pump 100. The manufacturing method includes steps of :
S1: Integrating the rotor core 73 and the permanent magnets 74. In step S1, the permanent magnets 74 are inserted into the rotor core 73 and then the rotor core 73 are wrapped with the protective sleeve 75 by a first process of insert-molding. The protective sleeve 75 covers both axial ends and circumferential surface of the rotor core 73.
S2: Acquiring the bearing assembly 90. In step S2, The two bearings 90 and the positioning sleeve 92 are provided. Then, the two bearing 91 are respectively embedded in the positioning grooves 91 defined at opposite ends of the positioning sleeve 92 to axially align the two bearing 91 and the positioning sleeve 92.
S3. Forming the support body 40 and the pre-integrated permanent magnets 74 and rotor core 73 formed by step S1 and the bearing assembly 90 acquired in step S2. In step S3, the bearing assembly 90, and the pre-integrated permanent magnets 74 and rotor core 73 are positioned in an injection tooling, with the bearing assembly 90 sleeved by the rotor core 73. Then a resin material is injected into the injection tooling to form the support body 40 to connect the pre-integrated permanent magnets 74 and rotor core 73, and the bearing assembly 90 by a second process of insert-molding. A gap between an outer circumferential wall of the bearing assembly 90 and an inner wall of the rotor core 73 is filled with the resin material.

In one embodiment, the first and second annular rings 41 of the support body 40 are respectively fixed to the two axial ends of the protective cover 75 and thereby sandwiching the rotor core 73 therebetween.

The bearing assembly 90 of the movable unit is mounted to the central shaft 72 by the separate bearings 91 adjacent to opposite axial ends of the central shaft 72 to improve stability of the rotation of the movable unit. The two bearings 91 are positioned and assembled by the positioning sleeve 92, high coaxiality of the two bearings 91 can be easily achieved. Mounting of the bearing assembly 90 with an injection-molding process will be benefit for simplifying the manufacturing process.

It can be understood that the order between steps S1 and S2 is interchangeable. Alternatively, steps S1 and S2 can be executed simultaneously. Anyway, both of steps S1 and S2 should be completed before step S3.

## Claims

1. An electric coolant pump (100), comprising
a pump house (10);
a motor (50) connected to the pump house (10) and comprising:
a stator with a fixed central shaft (72); and
a movable unit rotatably mounted within the stator, the movable unit comprising a support body (40), a bearing assembly (90) connected to the support body (40), a rotor core (73) fixed to the support body (40), a plurality of permanent magnets (74) attached to the rotor core (73), the bearing assembly (90) comprising at least one bearing (91) rotatably supported on the central shaft (72); and
an impeller (30) housed in the pump house (10) and driven by the motor (50); wherein the support body (40) is formed by an injection-molding process with the bearing assembly (90) and fixedly connecting with the rotor core (73), the bearing assembly comprises a cylindrical positioning sleeve (92) and two bearings (91) positioned at opposite ends of the positioning sleeve (92), the positioning sleeve (92) and the bearings (91) are sleeved on the central shaft (72), an inner diameter of the positioning sleeve (92) is larger than that of the bearings (91), the two bearings (91) are in friction fit with the central shaft (72), and the positioning sleeve (92) is in clearance fit with the central shaft (72) to prevent the positioning sleeve (92) from interfering with the central shaft (72).

2. The electric coolant pump (100) of claim 1, wherein opposite axial ends of the positioning sleeve (92) respectively defines a positioning groove (921), the two bearings (92) are respectively embedded in the positioning grooves (921) of the positioning sleeve (92).

3. The electric coolant pump (100) of claim 1, wherein at least part of the impeller (30) is integrally formed with the support body (40) by the injection-molding process.

4. The electric coolant pump (100) of claim 3, wherein the impeller (30) comprises a bottom bezel (33), a cover bezel (34) opposite and spaced apart from the bottom bezel (33), and a plurality of vanes (35) connected between the bottom bezel (33) and the cover bezel (34), the plurality of vanes (35) is integrally formed with the bottom bezel (33).

5. The electric coolant pump (100) of claim 1, wherein the support body (40) is provided with a first annular ring (41) and a second annular ring (42) axially spaced from and substantially parallel to each other, the rotor core (73) is sandwiched between the first and second annular rings (41, 42), the rotor core (73) are wrapped with a protective sleeve (75), the protective sleeve (75) mates with the support body (40) to cover all of the outer and inner surfaces of the rotor core (73).

6. The electric coolant pump (100) of claim 1, wherein the stator further comprises a cylindrical stator outer casing (61), a stator inner casing (71), a stator core (62) disposed between the stator outer casing (61) and the stator inner casing (71), a stator winding (63) wound around the stator core (62), the movable unit is housed in the stator inner casing (71), an end of the stator outer casing (61) and an end of the stator inner casing (71) are fixed to the pump house (10).

7. The electric coolant pump (100) of claim 6, wherein the stator inner casing (71) comprises a cylindrical portion (711) opened at one of opposite axial ends and closed at the other end with a bottom plate, and an annular flange (712) surrounding the open end of the cylindrical portion (711), the annular flange (712) is fastened to the pump house (10), an inner cavity (715) of the cylindrical portion (711) is in communication with a pump chamber (104) of the pump house (10).

8. The electric coolant pump (100) of claim 7, wherein one of opposite end of the central shaft (72) is fixed to the bottom plate of the cylindrical portion, and the other end of the central shaft (72) is fixed to the pump house (10) through the impeller (30).

9. The electric coolant pump (100) of claim 1, wherein said two bearings (91) are bushings made of graphite or a material having a low coefficient of friction, and are in friction fit with the central shaft (72).

10. A manufacturing method for the movable unit of the electric coolant pump (100) of claim 1, comprising:
integrating the rotor core (73) and the permanent magnets (74), comprising inserting the permanent magnets (74) into the rotor core (73), and then forming a protective sleeve (75) wrapping the rotor core (73) by a first process of insert-molding;
acquiring the bearing assembly (90) by providing two bearings (91) and a positioning sleeve (92) defining a positioning groove (921) at each of opposite axial ends thereof, and then respectively embedding the two bearings (91) at the positioning grooves (921) in opposite end of the positioning sleeve (92) to axially aligned the two bearings (91) and the positioning sleeve (92), wherein an inner diameter of the positioning sleeve (92) is larger than that of the bearings (91), the two bearings (91) are in friction fit with the central shaft (72) and the positioning sleeve (92) is in clearance fit with the central shaft (72) to prevent the positioning sleeve (92) from interfering with the central shaft (72); and
forming the support body (40), and integrating the pre-integrated permanent magnets (74) and rotor core (73), and the bearing assembly (90), comprising positioning the pre-integrated permanent magnets (74) and rotor core (73), and the bearing assembly (90) in an injection tooling, with the bearing assembly (90) sleeved by the rotor core (73), and then injecting a resin material into the injection tooling to form the support body (40) connecting the pre-integrated permanent magnets (74) and rotor core (73), and the bearing assembly (90) by a second process of insert-molding.

11. The manufacturing method of claim 10, wherein in forming the support body (40) by the second process of insert-molding, a gap between an outer circumferential wall of the bearing assembly (90) and an inner wall of the rotor core (73) is filled with the resin materials.

## Patentansprüche

1. Elektrische Kühlmittelpumpe (100), umfassend
ein Pumpengehäuse (10);
einen Motor (50), der mit dem Pumpengehäuse (10) verbunden ist, und umfassend:
einen Stator mit einer festen zentralen Welle (72) und
eine bewegliche Einheit, die innerhalb des Stators drehbar montiert ist, wobei die bewegliche Einheit einen Stützkörper (40), eine Lageranordnung (90), die mit dem Stützkörper (40) verbunden ist, einen Rotorkern (73), der an dem Stützkörper (40) befestigt ist, eine Vielzahl von Dauermagneten (74), die an dem Rotorkern (73) angebracht sind, umfasst, wobei die Lageranordnung (90) mindestens ein Lager (91) umfasst, das an der zentralen Welle (72) drehbar gestützt ist, und
ein Laufrad (30), das in dem Pumpengehäuse (10) untergebracht ist und von dem Motor (50) angetrieben wird,
wobei der Stützkörper (40) durch ein Spritzgussverfahren mit der Lageranordnung (90) und fest mit dem Rotorkern (73) verbindend ausgebildet wird, die Lageranordnung ein zylindrische Positionierhülse (92) und zwei Lager (91), die an entgegengesetzten Enden der Positionierhülse (92) positioniert sind, umfasst, die Positionierhülse (92) und die Lager (91) auf der zentralen Welle (72) umhüllt sind, ein Innendurchmesser der Positionierhülse (92) größer als der der Lager (91) ist, die zwei Lager (91) in Reibschluss mit der zentralen Welle (72) sind und die Positionierhülse (92) in Spielpassung mit der zentralen Welle (72) ist, um zu verhindern, dass die Positionierhülse (92) die zentrale Welle (72) stört.

2. Elektrische Kühlmittelpumpe (100) nach Anspruch 1, wobei entgegengesetzte axiale Enden der Positionierhülse (92) jeweils eine Positioniernut (921) definieren, wobei die zwei Lager (92) jeweils in den Positioniernuten (921) der Positionierhülse (92) eingebettet sind.

3. Elektrische Kühlmittelpumpe (100) nach Anspruch 1, wobei mindestens ein Teil des Laufrads (30) durch das Spritzgussverfahren integral mit dem Stützkörper (40) ausgebildet wird.

4. Elektrische Kühlmittelpumpe (100) nach Anspruch 3, wobei das Laufrad (30) einen unteren Drehring (33), einen Deckdrehring (34), der entgegengesetzt zu und beabstandet von dem unteren Drehring (33) ist, und eine Vielzahl von Flügeln (35), die zwischen dem unteren Drehring (33) und dem Deckdrehring (34) verbunden sind, umfasst, wobei die Vielzahl von Flügeln (35) integral mit dem unteren Drehring (33) ausgebildet ist.

5. Elektrische Kühlmittelpumpe (100) nach Anspruch 1, wobei der Stützkörper (40) mit einem ersten kranzförmigen Ring (41) und einem zweiten kranzförmigen Ring (42) versehen ist, die axial voneinander beabstandet und im Wesentlichen parallel zueinander sind, wobei der Rotorkern (73) zwischen dem ersten und dem zweiten kranzförmigen Ring (41, 42) eingeschoben ist, wobei der Rotorkern (73) mit einer Schutzhülse (75) umwickelt ist, wobei die Schutzhülse (75) mit dem Stützkörper (40) zusammenpasst, um die gesamte Außenfläche und Innenfläche des Rotorkerns (73) abzudecken.

6. Elektrische Kühlmittelpumpe (100) nach Anspruch 1, wobei der Stator weiterhin eine zylindrische Statoraußenverschalung (61), eine Statorinnenverschalung (71), einen Statorkern (62), der zwischen der Statoraußenverschalung (61) und der Statorinnenverschalung (71) angeordnet ist, eine Statorwicklung (63), die um den Statorkern (62) gewickelt ist, umfasst, wobei die bewegliche Einheit in der Statorinnenverschalung (71) untergebracht ist, wobei ein Ende der Statoraußenverschalung (61) und ein Ende des Statorinnenverschalung (71) an dem Pumpengehäuse (10) befestigt sind.

7. Elektrische Kühlmittelpumpe (100) nach Anspruch 6, wobei die Statorinnenverschalung (71) einen zylindrischen Abschnitt (711), der an einem von entgegengesetzten axialen Enden geöffnet und an dem anderen Ende mit einer Bodenplatte geschlossen ist, und einen kranzförmigen Flansch (712), der das offene Ende des zylindrischen Abschnitts (711) umgibt, umfasst, wobei der kranzförmige Flansch (712) an dem Pumpengehäuse (10) gesichert ist, wobei ein innerer Hohlraum (715) des zylindrischen Abschnitts (711) in Kommunikation mit einer Pumpenkammer (104) des Pumpengehäuses (10) ist.

8. Elektrische Kühlmittelpumpe (100) nach Anspruch 7, wobei eines von entgegengesetzten Enden der zentralen Welle (72) an der Bodenplatte des zylindrischen Abschnitts befestigt ist und das andere Ende der zentralen Welle (72) durch das Laufrad (30) an dem Pumpengehäuse (10) befestigt ist.

9. Elektrische Kühlmittelpumpe (100) nach Anspruch 1, wobei die zwei Lager (91) Lagerbuchsen sind, die aus Graphit oder einem Material mit einem niedrigen Reibungskoeffizienten hergestellt sind, und in Reibschluss mit der zentralen Welle (72) sind.

10. Herstellungsverfahren für die bewegliche Einheit der elektrischen Kühlmittelpumpe (100) nach Anspruch 1, umfassend:
Integrieren des Rotorkerns (73) und der Dauermagneten (74), umfassend ein Einsetzen der Dauermagneten (74) in den Rotorkern (73) und dann ein Ausbilden einer Schutzhülse (75), die den Rotorkern (73) umwickelt, durch ein erstes Umspritzgussverfahren;
Erlangen der Lageranordnung (90) durch Bereitstellen von zwei Lagern (91) und einer Positionierhülse (92), die eine Positioniernut (921) an jedem von entgegengesetzten axialen Enden davon definiert, und dass jeweils Einbetten der zwei Lager (91) an den Positioniernuten (921) in einem entgegengesetzten Ende der Positionierhülse (92), um die zwei Lager (91) und die Positionierhülse (92) axial auszurichten, wobei ein Innendurchmesser der Positionierhülse (92) größer als der der Lager (91) ist, die zwei Lager (91) in Reibschluss mit der zentralen Welle (72) sind und die Positionierhülse (92) in Spielpassung mit der zentralen Welle (72) ist, um zu verhindern, dass die Positionierhülse (92) die zentrale Welle (72) stört; und
Ausbilden des Stützkörpers (40) und Integrieren der vorintegrierten Dauermagneten (74) und des vorintegrierten Rotorkerns (73) und der Lageranordnung (90), umfassend ein Positionieren der vorintegrierten Dauermagneten (74) und des vorintegrierten Rotorkerns (73) und der Lageranordnung (90) in einem Spritzwerkzeug, wobei die Lageranordnung (90) von dem Rotorkern (73) umhüllt wird, und dann ein Spritzen eines Kunststoffmaterials in das Spritzwerkzeug, um den Stützkörper (40), der die vorintegrierten Dauermagneten (74) und den vorintegrierten Rotorkern (73) und die Lageranordnung (90) verbindet, durch ein zweites Umspritzgussverfahren auszubilden.

11. Herstellungsverfahren nach Anspruch 10, wobei beim Ausbilden des Stützkörpers (40) durch das zweite Umspritzgussverfahren eine Lücke zwischen einer umlaufenden Außenwand der Lageranordnung (90) und einer Innenwand des Rotorkerns (73) mit den Kunststoffmaterialien gefüllt wird.

## Revendications

1. Une pompe à liquide de refroidissement électrique (100), comprenant
un poste de pompage (10) ;
un moteur (50) connecté au boîtier de pompage (10) et comprenant :
un stator avec un arbre central fixe (72) ; et une unité mobile montée de manière rotative à l'intérieur du stator, l'unité mobile comprenant un corps de support (40), un ensemble roulement (90) relié au corps de support (40), un noyau de rotor (73) fixé au corps de support (40), une pluralité d'aimants permanents (74) fixés au noyau de rotor (73), l'ensemble roulement (90) comprenant au moins un roulement (91) supporté de manière rotative sur l'arbre central (72) ; et une roue à aubes (30) logée dans le poste de pompage (10) et entraînée par le moteur (50) ;
dans lequel le corps de support (40) est formé par un processus de moulage par injection avec l'ensemble roulement (90) et relié de manière fixe au noyau de rotor (73), l'ensemble roulement comprend un manchon de positionnement cylindrique (92) et deux roulements (91) positionnés aux extrémités opposées du manchon de positionnement (92), le manchon de positionnement (92) et les roulements (91) sont emmanchés sur l'arbre central (72), un diamètre intérieur du
manchon de positionnement (92) est plus grand que celui des deux roulements (91), les deux roulements (91) sont en ajustement par friction avec l'arbre central (72), et le manchon de positionnement (92) est en ajustement avec jeu avec l'arbre central ( 72) pour empêcher le manchon de positionnement (92) d'interférer avec l'arbre central (72).

2. La pompe électrique à liquide de refroidissement (100) selon la revendication 1, dans laquelle les extrémités axiales opposées du manchon de positionnement (92) définit respectivement une rainure de positionnement (921), les deux roulements (92) sont respectivement encastrés dans les rainures de positionnement (921) du manchon de positionnement (92).

3. La pompe électrique à liquide de refroidissement (100) selon la revendication 1, dans laquelle au moins une partie de la roue à aubes (30) est formée d'un seul tenant avec le corps de support (40) par le processus de moulage par injection.

4. La pompe électrique à liquide de refroidissement (100) selon la revendication 3, dans laquelle la roue à aubes (30) comprend une lunette inférieure (33), une lunette de couverture (34) opposée et espacée de la lunette inférieure (33), et une pluralité d'aubes (35) reliées entre la lunette inférieure (33) et la lunette de couverture (34), la pluralité d'aubes (35) est formée d'un seul tenant avec lunette inférieure (33).

5. La pompe électrique à liquide de refroidissement (100) selon la revendication 1, dans laquelle le corps de support (40) comprend un premier anneau annulaire (41) et un second anneau annulaire (42) espacés axialement et sensiblement parallèles l'un à l'autre, le noyau du rotor (73) est pris en sandwich entre le premier et le second anneau annulaire (41, 42), le noyau du rotor (73) est enveloppé d'un manchon de protection (75), le manchon de protection (75) s'accouple avec le corps de support (40) pour couvrir toutes les 10 surfaces extérieures et intérieures du noyau du rotor (73).

6. La pompe électrique à liquide de refroidissement (100) selon la revendication 1, dans laquelle le stator comprend en outre un boîtier externe de stator cylindrique (61), un boîtier interne de stator (71), un noyau de stator (62) disposé entre le boîtier externe de stator (61) et le boîtier interne de stator (71), un enroulement de stator (63) enroulé autour du noyau de stator (62), l'unité mobile est logée dans le boîtier interne du stator (71), une extrémité du boîtier externe de stator (61) et une extrémité du boîtier interne de stator (71) sont fixées au corps de pompe (10).

7. La pompe électrique à liquide de refroidissement (100) selon la revendication 6, dans laquelle le boîtier interne du stator (71) comprend une partie cylindrique (711) ouverte à l'une des extrémités axiales opposées et fermée à l'autre extrémité par une plaque inférieure, et une bride annulaire (712) entourant l'extrémité ouverte de la partie cylindrique (711), la bride annulaire (712) est fixée au corps de pompe (10), une cavité interne (715) de la partie cylindrique (711) est en communication avec une chambre de pompe (104) du poste de pompage (10).

8. La pompe électrique à liquide de refroidissement (100) selon la revendication 7, dans laquelle l'une des extrémités opposées de l'arbre central (72) est fixée à la plaque inférieure de la partie cylindrique, et l'autre extrémité de l'arbre central (72) est fixée au poste de pompage (10) à travers la roue à aubes (30).

9. La pompe électrique à liquide de refroidissement (100) selon la revendication 1, dans laquelle lesdits deux roulements (91) sont des bagues en graphite ou en matériau à faible coefficient de frottement, et sont en ajustement par friction avec l'arbre central (72).

10. Un procédé de fabrication de l'unité mobile de la pompe électrique à liquide de refroidissement (100) selon
la revendication 1, intégrant le noyau de rotor (73) et les aimants permanents (74), comprenant l'insertion des aimants permanents (74) dans le noyau de rotor (73), puis la formation d'un manchon de protection (75) enveloppant le noyau de rotor (73) par un premier processus de moulage par insertion ;
acquérant l'ensemble de roulement (90) en fournissant deux roulements (91) et un manchon de positionnement (92) définissant une rainure de positionnement (921) à chacune de ses extrémités axiales opposées, puis encastrant respectivement les deux roulements (91) au niveau des rainures de positionnement (921) à l'extrémité opposée du manchon de positionnement (92) pour aligner axialement le deux roulements (91) et le manchon de positionnement (92), le diamètre intérieur du manchon de positionnement (92) étant plus grand que celui des roulements (91), les deux roulements (91) étant en ajustement par friction avec l'arbre central (72) et le manchon de positionnement (92) est en ajustement avec jeu avec l'arbre central (72) pour empêcher le manchon de positionnement (92) d'interférer avec l'arbre central (72) ; et
former le corps de support (40), et intégrer les aimants permanents (74) et le noyau de rotor (73) préintégré, ainsi que l'ensemble roulement (90), comprenant le positionnement des aimants permanents (74) et du noyau de rotor (73) préintégré, et l'ensemble de roulement (90) dans un outillage d'injection, l'ensemble roulement (90) étant emmanché par le noyau de rotor (73), puis injecter un matériau en résine dans l'outillage d'injection pour former le corps de support (40) reliant les aimants permanents préintégrés (74) et le noyau de rotor (73), et l'ensemble de roulement (90) par un second processus de moulage par insertion.

11. Le procédé de fabrication selon la revendication 10, selon lequel, lors de la formation du corps de support (40), par le second processus de moulage par insertion, un espace entre une paroi circonférentielle externe de l'ensemble de roulement (90) et une paroi interne du noyau de rotor (73) est remplie de matériaux en résine.
